# EUROPÄISCHE PATENTSCHRIFT

(11) **EP 1 546 659 B1**
(45) Veröffentlichungstag und Bekanntmachung des Hinweises auf die Patenterteilung: **01.08.2007**
(21) Anmeldenummer: 03798889.6
(22) Anmeldetag: 04.09.2003
(51) Int. Cl.: G01D 5/244, G01D 18/00, G01D 5/36

(54) **MESSSYSTEM UND VERFAHREN ZU DESSEN FUNKTIONS BERPRüFUNG**
MEASURING SYSTEM AND METHOD FOR THE FUNCTIONAL MONITORING THEREOF
SYSTEME DE MESURE ET PROCEDE POUR CONTROLER SON FONCTIONNEMENT

(30) Priorität: 25.09.2002 DE 10244583
(43) Veröffentlichungstag der Anmeldung: 29.06.2005
(73) Patentinhaber: Dr. Johannes Heidenhain GmbH, 83292 Traunreut (DE)
(72) Erfinder: HOFBAUER, Hermann, 83308 Trostberg (DE); STRASSER, Erich, 83308 Trostberg (DE)
(86) Internationale Anmeldenummer: PCT/EP2003/009796
(87) Internationale Veröffentlichungsnummer: WO 2004/031695

(56) Entgegenhaltungen:
- EP-A- 0 800 059
- EP-A- 0 857 949
- DE-A- 3 631 429
- DE-A- 3 829 815

## Beschreibung

Die Erfindung betrifft ein Messsystem, insbesondere ein Positionsmesssystem, dessen Funktion einfach überprüft werden kann, gemäß dem Anspruch 1. Darüber hinaus umfasst die Erfindung ein Verfahren zur Funktionsüberprüfung gemäß dem Anspruch 4.

In Positionsmesssystemen erzeugen Positionssensoren in einem Messgerät elektrische Signale, welche Aufschluss über die Lage von relativ zueinander bewegten Objekten liefern. Die Erfindung betrifft insbesondere Messsysteme mit Messgeräten, welche sowohl vergleichsweise feine, inkrementale Lageinformationen als auch relativ grobe Positionsangaben erzeugen. Diese beiden Positionsdaten sind insbesondere für die Steuerung von Elektroantrieben zu Bewegung von Achsen einer Bearbeitungsmaschine, wie etwa einer Werkzeugmaschine oder eines Roboters, von großer Bedeutung. In dieser Anwendung werden die feinen inkrementalen Lageinformationen zur exakten Positionsbestimmung, beispielsweise eines Werkzeuges einer Werkzeugmaschine genutzt.

Häufig sind die entsprechenden Elektroantriebe als rotatorische Elektromotoren ausgestaltet, für die in der Regel Drehgeber zur Drehwinkelmessung eingesetzt werden. Die Erfindung kann aber auch im Zusammenhang mit dem Betrieb von Linearmotoren zum Einsatz kommen.

Es sind Drehgeber bekannt, die eine Winkelmessung an einer drehbaren Welle in inkrementalen Messschritten ermöglichen, aber auch sogenannte absolute Drehgeber, welche auch als Code-Drehgeber bezeichnet werden. Diese gestatten eine Absolutwinkel-Bestimmung innerhalb einer einzigen Wellenumdrehung. Ist zudem die Erfassung der Anzahl erfolgter Wellenumdrehungen nötig, so werden üblicherweise sogenannte Multiturn-Drehgeber eingesetzt. In derartigen Multiturn-Drehgebern erfolgt die Bestimmung der absoluten Winkelposition innerhalb einer Wellenumdrehung, d.h. zwischen 0° und 360°, über eine mit der Welle verbundene Codescheibe, die etwa mit Hilfe einer geeigneten fotoelektrischen Abtasteinheit abgetastet wird. Eine Messung der Absolutposition der angetriebenen Welle ist somit auch über mehrere Umdrehungen hin möglich.

Die Signale dieser Messgeräte dienen oft zur Steuerung der Bearbeitungsmaschinen. Der Begriff Bearbeitungsmaschine ist nicht auf Werkzeugmaschinen eingegrenzt, sondern umfasst auch Maschinen zur Bestückung von Elektronikbauteilen oder zur Bearbeitung von Halbleiterelementen. Darüber hinaus fallen unter die Bezeichnung Bearbeitungsmaschine auch Automatisierungsmaschinen, wie etwa Roboter.

Bei herkömmlichen Positionsmesssystemen wurden bisher zusätzlich zu den digitalen Positionsdaten noch analoge Positionssignale vom Messgerät zur Maschinensteuerung übertragen, wo diese dann interpoliert wurden. Infolge der fortschreitenden Miniaturisierung der Elektronik, werden nun vermehrt diese Interpolationsprozesse in einer geeigneten elektronischen Schaltung innerhalb des Messgerätes selbst durchgeführt, so dass die analogen Positionssignale nicht zur Maschinensteuerung weitergeleitet werden. Dies reduziert den Verkabelungsaufwand, der einen bedeutenden Einfluss auf die Kosten eines Messsystems hat.

Bei sicherheitsrelevanten Maschinenanwendungen wurde bisher allerdings in der Maschinensteuerung ein Vergleich der digitalen Positionsdaten mit den analogen Positionssignalen vorgenommen, um Fehler zu erkennen. Aufgrund der nunmehr in der Maschinensteuerung fehlenden analogen Positionssignale kann dieser Vergleich nicht mehr durchgeführt werden.

Aus diesem Grund werden nicht selten bei Messsystemen, bei denen aus den erläuterten Gründen keine analogen Positionssignale in die Maschinensteuerung gelangen, neben den aktuellen, oft absoluten, Positionsdaten sogenannte statische Bits über eine parallele oder serielle Schnittstelle vom Messgerät an die Maschinensteuerung weitergegeben. Diese statischen Bits können beispielsweise Fehlerbits sein, welche im Normalbetrieb stets einen bestimmten Pegel aufweisen, und nur im (sehr seltenen) Fehlerfall durch die Änderung des Pegels auf einen Fehler aufmerksam machen.

Es zeigte sich jedoch, dass gerade bei sicherheitsrelevanten Überwachungen diese Art der Übertragung von Fehlerinformationen nachteilig ist, weil nicht ausgeschlossen werden kann, dass durch einen Defekt stets ein konstanter Pegel eines Fehlerbits ausgegeben wird, also dieser Defekt auch bei Störungen eine Pegeländerung nicht zulässt.

In der DE 38 29 815 C2 der Anmelderin wird eine Positionsmesseinrichtung gezeigt, bei der durch ein Aktivierungssignal eine Fehlerüberprüfung ausgelöst wird. Durch die dort beschriebene Erfindung kann aber die Funktionsfähigkeit der Überwachungselektronik selbst nicht überprüft werden. Darüber hinaus ist dort der Aufwand für die Signalübertragung vergleichsweise groß.

Der Erfindung liegt daher die Aufgabe zugrunde, ein Messsystem zu schaffen, welches einen sicheren bzw. zuverlässigen Betrieb von Bearbeitungsmaschinen ermöglicht, wobei der Aufwand für die Signalübertragung vergleichsweise niedrig ist.

Diese Aufgabe wird erfindungsgemäß durch die Merkmale des Anspruches 1 gelöst.

Darüber hinaus wird durch die Erfindung ein Verfahren zur Überprüfung von Fehlerinformationen geschaffen, durch welches die Sicherheit bzw. die Zuverlässigkeit von Bearbeitungsmaschinen signifikant erhöht wird. Dies wird durch das Verfahren gemäß dem Anspruch 4 gelöst.

Der Erfindung liegt der Gedanke zugrunde, dass im Messgerät während eines Prüfbetriebs gezielt eine Störung durch Aufschalten eines Testpotenzials auslösbar ist, und dann überprüft wird, ob durch diese Störung ein Fehlerbit mit entsprechendem Pegel in der Maschinensteuerung eintrifft. Durch die Erfindung soll insbesondere die Funktionsfähigkeit einer Überwachungselektronik, z. B. einer Signalamplitudenüberwachung, überprüft werden. Unter Testpotenzial kann etwa die Spannung einer Testpotenzialquelle verstanden werden, oder im einfachsten Fall das Erdpotenzial.

In einer bevorzugten Ausgestaltung der Erfindung werden die Schaltungszustände zum Aufschalten der Testpotenzialquelle, insbesondere automatisch, von der Maschinensteuerung ausgelöst.

Vorteilhafte Ausbildungen der Erfindung entnimmt man den abhängigen Ansprüchen.

Weitere Einzelheiten und Vorteile des erfindungsgemäßen Messsystems und des entsprechenden Verfahrens ergeben sich aus der nachfolgenden Beschreibung eines Ausführungsbeispieles anhand der beiliegenden Figuren.

Es zeigen die
- Figur 1a: eine schematische Darstellung einer Ausbildung des erfindungsgemäßen Messsystems im Normalbetrieb,
- Figur 1b: eine schematische Darstellung einer Ausbildung des erfindungsgemäßen Messsystem im Prüfbetrieb,
- Figur 2: einen Spannungsverlauf mit der Testspannung
- Figur 3: eine schematische Darstellung einer weiteren Ausbildung des erfindungsgemäßen Messsystems,

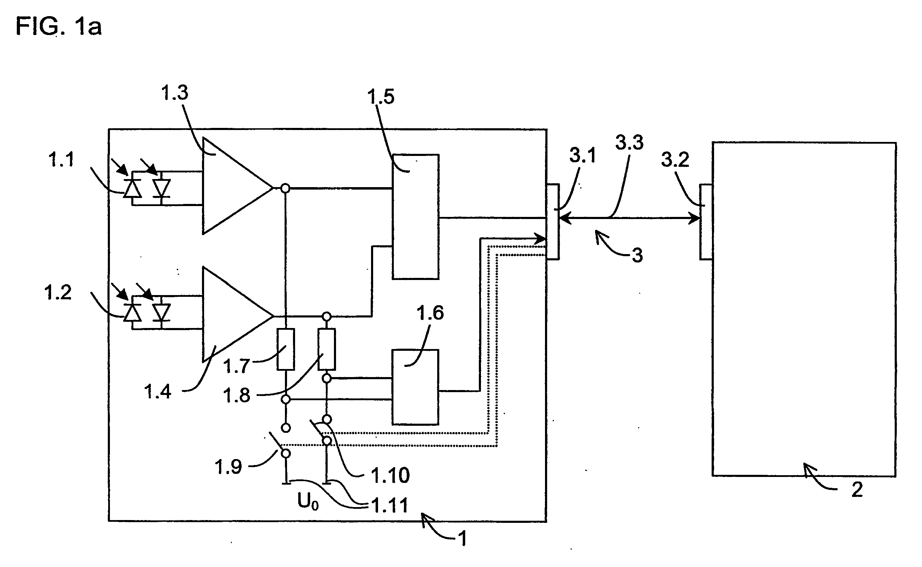

In der Figur 1a ist ein Messsystem gezeigt, welches einen Drehgeber 1, eine Maschinensteuerung 2 und ein Datenübertragungsmittel 3 umfasst.

Der Drehegeber 1 weist Fotoelemente 1.1, 1.2, Verstärker 1.3, 1.4, eine Auswerteelektronik 1.5 und eine Signalamplitudenüberwachung 1.6 auf. An den Leitungen zwischen den Verstärkern 1.3, 1.4' und der Auswerteelektronik 1.5 befinden sich Abzweigungen mit Widerständen 1.7, 1.8. Darüber befinden sich in der Schaltung des Drehgebers 1 Schaltelemente 1.9, 1.10, welche in elektrischem Kontakt zu einer Testpotenzialquelle 1.11 stehen.

Die Schaltelemente 1.9, 1.10 können zwei Schaltelementzustände einnehmen. Im ersten Schaltelementzustand ist die Testpotenzialquelle 1.11 von der Signalamplitudenüberwachung 1.6 getrennt, im zweiten Schaltelementzustand ist ein elektrischer Kontakt zwischen der Testpotenzialquelle 1.11 und der Signalamplitudenüberwachung 1.6 hergestellt.

Das Datenübertragungsmittel 3 besteht aus einer Schnittstellenbuchse 3.1 am Drehgeber 1, einem mehradrigen Kabel 3.3 mit Steckern und einer Schnittstellenbuchse 3.1 an der Maschinensteuerung 2. Alternativ dazu kann auch ein drahtloses Datenübertragungsmittel 3 vorgesehen werden. Entsprechend können dann anstelle der Schnittstellenbuchsen 3.1, 3.2 geeignete Sender- und Empfängerelemente angeordnet werden.

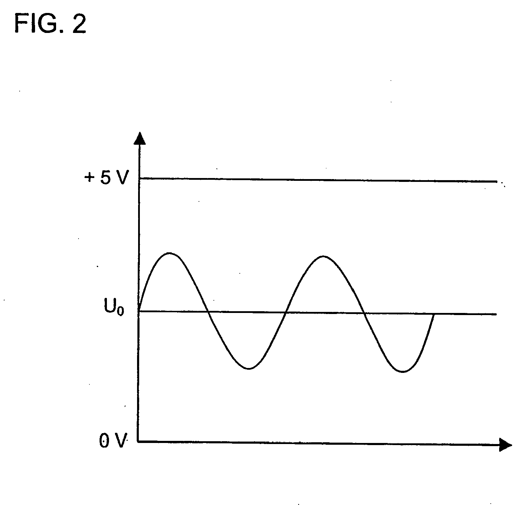

Entsprechend der Winkellage einer zu messenden Welle, wird Licht einer in den Figuren nicht dargestellten LED moduliert und durch die Fotoelemente 1.1, 1.2 in Fotoströme umgewandelt. Diese Fotoströme werden mit Hilfe der Verstärker 1.3, 1.4 verstärkt, so dass dann analoge Positionssignale, welche gemäß der Figur 2 eine Sinusform aufweisen vorliegen. Diese Positionssignale werden in der Auswerteelektronik 1.5 unter anderem einem Interpolationsprozess zugeführt, so dass die Winkel- oder Positionsauflösung des Messgerätes 1 vervielfacht werden kann. Darüber hinaus werden in der Auswerteelektronik 1.5 absolute digitale Positionswerte generiert, die als Datenpaket, bestehend aus einer Vielzahl von Datenbits, seriell über die Schnittstellen 3.1, 3.2 und das Kabel 3.3 an die Maschinensteuerung in einer Taktzeit von 50 µs im gezeigten Beispiel übergeben werden.

Parallel dazu werden die analogen Positionssignale einer Signalamplitudenüberwachung 1.6 zugeführt. In dieser Signalamplitudenüberwachung 1.6 wird überprüft, ob die Amplituden der analogen Positionssignale innerhalb plausibler Grenzen liegen. Im Normalbetrieb wird dieses Kriterium von den analogen Positionssignalen erfüllt, so dass mit dem gleichen Datenpaket, mit dem auch die absoluten digitalen Positionswerte an die Maschinensteuerung 2 übermittelt werden, ein Fehlerbit übermittelt wird, dessen Pegel den Normalzustand bzw. den ungestörten Betrieb des Messsystems signalisiert. Dieses Fehlerbit wird also üblicherweise mit gleichbleibenden Pegel, im vorgestellten Ausführungsbeispiel alle 50 µs, vom Messgerät 1 ;zur Maschinensteuerung 2 übertragen und wird deshalb als statisches Fehlerbit bezeichnet.

Sobald die Amplituden der analogen Positionssignale außerhalb der plausiblen Grenzen liegen, wird der Pegel des Fehlerbits verändert, und das entsprechende Fehlerbit an die Maschinesteuerung 2 mit dem nächsten Datenpaket übertragen. Als Reaktion wird von der Maschinensteuerung 2 ein Not-Aus für die gesamte Maschine ausgelöst.

Es kann aber auch der Fall eintreten, dass beispielsweise durch einen Kurzschluss, der Pegel des Fehlerbits nicht veränderbar ist. Dann würde trotz einer Störung stets der gleiche Pegel des Fehlerbits an die Maschinensteuerung 2 weitergegeben, so dass auch bei einer Störung keine Abschaltung der Maschine erfolgen würde.

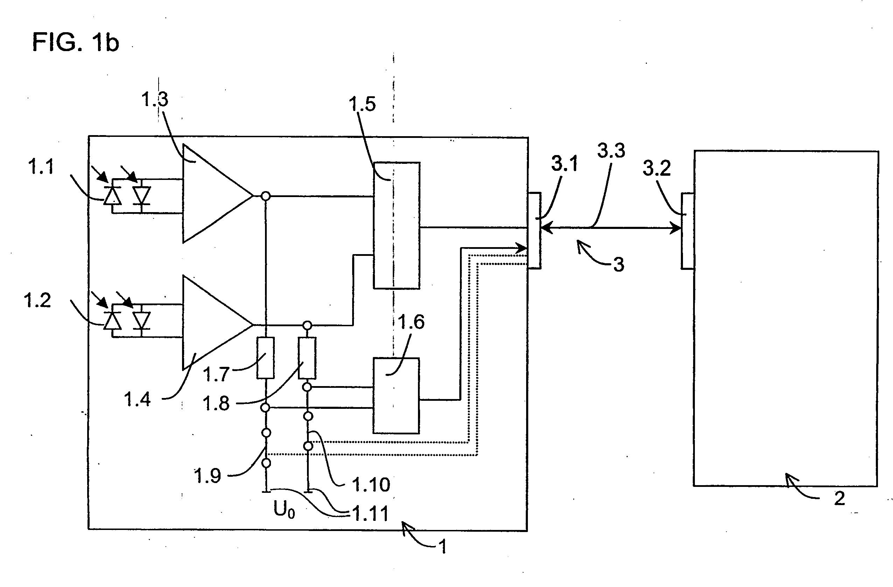

Um diese Gefahr zu vermeiden, wird kurzeitig ein Prüfbetrieb mit einem Schaltelementzustand, gemäß der Figur 1 b, durchgeführt. Zu diesem Zweck wird nunmehr von der Maschinensteuerung 2 ein Signal an das Messgerät abgesetzt. Das Signal wird in Form eines Codewortes, oder Mode-Befehls von der Maschinensteuerung 2 über eine Datenleitung des Kabels 3.3 an den Drehgeber 1 übertragen. Die Datenleitung des Kabels 3.3 dient sowohl zur Übertragung für die Mode-Befehle der Maschinensteuerung 2 an den Drehgeber 1 als auch für die Übertragung von Daten und Signalen, einschließlich des Fehlerbits, aus dem Drehgeber 1 an die Maschinensteuerung 2. Es handelt sich also, wie es auch der Doppelpfeil in den Figuren 1 a, 1b und 3 verdeutlicht, um eine bidirektionale Datenübertragung zwischen der Maschinensteuerung 2 und dem Drehgeber 1.

Der übertragene Mode-Befehl wird im Drehgeber 1 dekodiert, so dass der Prüfbetrieb ausgelöst wird, was zunächst zum Schließen der Schaltelemente 1.9, 1.10 führt. Dadurch liegt nun an der Signalamplitudenüberwachung 1.6 die Spannung U₀ der Testpotenzialquelle 1.11 an. Die Höhe der Spannung U₀ ergibt sich aus dem Spannungsverlauf des entsprechenden analogen Positionssignals (entspricht der Symmetrieachse des Spannungsverlaufes des analogen Positionssignals) gemäß der Figur 2. Durch die Widerstände 1.7, 1.8 wird, wie in der Figur 1b gezeigt, eine Einkopplung der Spannung U₀ in die Auswerteelektronik 1.5 weitgehend vermieden. Die Signalamplitudenüberwachung 1.6 stellt also bei geschlossenem Schaltelement 1.9 fest, dass keine ausreichende Amplitude des analogen Positionssignals vorliegt, und gibt deshalb ein Fehlerbit mit einem geänderten Pegel aus. Die Maschinensteuerung 2 ist so programmiert, dass während drei Taktzeiten, in diesem Fall also 150 µs, nach dem Aufschalten der Spannung U₀ keine Reaktion (Not-Aus) auf das Eintreffen eines Fehlerbits mit geändertem Pegel ausgelöst wird.

Sollte jedoch von der Maschinensteuerung 2 keine Pegeländerung des Fehlerbits festgestellt werden, obwohl die Spannung U₀ aufgeschalten wurde, so wird eine entsprechende Fehlermeldung ausgegeben. Auf diese Weise ist insbesondere eine Überprüfung der Funktionsfähigkeit der Signalamplitudenüberwachung 1.6 möglich.

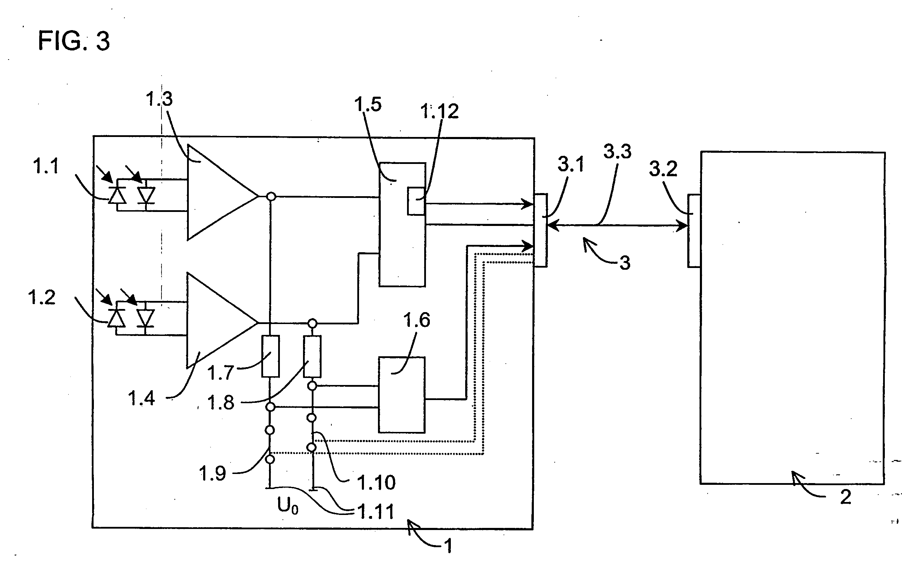

In einer weiteren Ausgestaltung der Erfindung ist gemäß der Figur 3 in der Auswerteelektronik 1.5 zusätzlich eine digitale Signalamplitudenüberwachung 1.12 integriert. Diese führt parallel zur Signalamplitudenüberwachung 1.6 eine Plausibilitätskontrolle der digitalisierten Positionsdaten durch. Im Normalbetrieb wird ein Not-Aus ausgelöst, sobald ein Fehlerbit mit verändertem Pegel, unabhängig davon ob er von der Signalamplitudenüberwachung 1.6 oder von der digitalen Signalamplitudenüberwachung 1.12 herrührt, in die Maschinesteuerung 2 gelangt. Selbstverständlich erfolgt auch ein Not-Aus wenn sowohl die Signalamplitudenüberwachungen 1.6, als auch die digitale Signalamplitudenüberwachung 1.12 einen Fehler durch ein Fehlerbit mit verändertem Pegel meldet.

Wenn nun im Prüfbetrieb die Funktionsfähigkeit der Signalamplitudenüberwachung 1.6 durch Aufschalten des Testpotenzials U₀ überprüft wird, kann die Maschinensteuerung 2 so programmiert sein, dass sie beim Eintreffen des Fehlerbits mit verändertem Pegel aus der Signalamplitudenüberwachung 1.6 keinen Not-Aus auslöst. Erreichen die Maschinensteuerung 2 aber im Prüfbetrieb sowohl von der Signalamplitudenüberwachung 1.6 als auch von der digitalen Signalamplitudenüberwachung 1:12 Fehlerbits mit verändertem Pegel, also quasi zwei Fehlermeldungen, so wird ein Not-Aus ausgelöst. Auf diese Weise ist es möglich, dass auch im Prüfbetrieb eine ausreichende Sicherheit gegeben ist.

Die Erfindung ist nicht auf Messsysteme und Verfahren eingeschränkt, bei denen von Fotoelementen 1.1, 1.2 generierte Positionssignale überwacht werden. Vielmehr können mit der Erfindung unter anderem auch Temperatursignale, frequenzbeschreibende Signale, oder Signale, welche Aufschluss über den Ladezustand von Batterien geben, berücksichtigt werden.

Insbesondere kann die Erfindung mit Vorteil bei Positionsmessgeräten eingesetzt werden, die neben den Positionsdaten zusätzliche Messdaten von weiteren Sensoren über eine gemeinsame Schnittstelle bzw. das gemeinsame Datenübertragungsmittel 3 bidirektional zwischen dem Positionsmessgerät, hier dem Drehgeber 1 und der Maschinensteuerung 2 übertragen. So werden beispielsweise häufig neben den Positionsmessungen im Drehgeber . 1 auch Geschwindigkeits- und/oder Beschleunigungsmessungen, etwa mit einem Ferraris-Sensor durchgeführt. Auch die Funktionsfähigkeit der Signalüberwachung dieser Sensoren kann mit der Erfindung überprüft werden. Das gleiche gilt auch für Drehgeber 1, in die eine Temperaturüberwachung, etwa für einen Elektromotor integriert ist. Mit Vorteil kann auch hier die Funktionsfähigkeit der Temperatursignalüberwachung mit der Erfindung überprüft werden.

## Patentansprüche

1. Messsystem, bestehend aus
- einem Messgerät (1),
- einem weiteren Gerät (2) und
- einem Datenübertragungsmittel (3) zum Übertragen von Datenbits zwischen dem Messgerät (1) und dem weiteren Gerät (2),
wobei das Messgerät(1)
- eine Signalüberwachungsschaltung (1.6)
- und ein Schaltelement (1.9, 1.10) aufweist, und
das Schaltelement (1.9, 1.10) in elektrischem Kontakt zu einer Testpotenzialquelle (1.11) steht, und
in einem Schaltelementzustand die Testpotenzialquelle (1.11) in Kontakt mit der Signalüberwachungsschaltung (1.6) ist, und
die Signalüberwachungsschaltung (1.6) darüber hinaus mit dem Datenübertragungsmittel (3) in Kontakt ist.

2. Messsystem gemäß Anspruch 1, wobei das Messgerät ein Positionsmessgerät, insbesondere ein Drehgeber oder ein Längenmessgerät ist.

3. Messsystem gemäß einem der vorhergehenden Ansprüche, wobei das weitere Gerät (2) eine Maschinensteuerung, insbesondere einer Bearbeitungsmaschine, ist.

4. Verfahren zur Funktionsüberprüfung eines Messsystems, wobei
- im Normalbetrieb des Messsystems zur Signalisierung eines ungestörten Betriebs eines Messgerätes (1) vom Messgerät (1) ein Bit mit gleichbleibendem Pegel über ein Datenübertragungsmittel (3) an ein weiteres Gerät (2) übertragen wird, und
- in einem Prüfbetrieb des Messsystems
- eine Signalüberwachungsschaltung (1.6) im Messgerät (1) mit einer Testpotenzialquelle (1.11) in elektrischen Kontakt gebracht wird, und
- in dem weiteren Gerät (2) überprüft wird, ob der Prüfbetrieb eine Änderung des Pegels des Bits bezogen auf den Pegel des Normalbetriebs bewirkt.

5. Verfahren gemäß Anspruch 4, wobei im Normalbetrieb des Messsystems eine Änderung des Pegels des Bits eine Reaktion des weiteren Gerätes (2) auslöst, während im Prüfbetrieb die Änderung des Pegels des Bits keine Reaktion des weiteren Gerätes (2) auslöst.

6. Verfahren gemäß Anspruch 4 oder Anspruch 5, wobei die Testpotenzialquelle (1.11) mit der Signalüberwachungsschältung (1.6) infolge eines Signals des weiteren Gerätes (2) in elektrischen Kontakt gebracht wird.

7. Verfahren gemäß Anspruch 4, Anspruch 5 oder Anspruch 6, wobei der Prüfbetrieb automatisch in definierten Zeitabständen zur Überprüfung der Funktionsfähigkeit des Messgerätes (1) ausgelöst wird.

8. Verfahren gemäß einem der Ansprüche 4 bis 7, wobei der Prüfbetrieb manuell zur Überprüfung der Funktionsfähigkeit des Messgerätes (1) ausgelöst wird.

9. Verfahren gemäß einem der Ansprüche 4 bis 8, wobei bei Erreichen bestimmter Maschinenzustände, wie etwa Werkzeug- oder Werkstückwechsel, der Prüfbetrieb automatisch zur Überprüfung der Funktionsfähigkeit des Messgerätes (1) ausgelöst wird.

## Claims

1. Measuring system comprising
- a measuring device (1)
- a further device (2) and
- a data transmission means (3) for transmitting data bits between the measuring device (1) and the further device (2),
the measuring device (1) having
- a signal monitoring circuit (1.6)
- and a switch (1.9, 1.10), and
the switch (1.9, 1.10) being in electrical contact with a test potential source (1.11), and
in one switch state, the test potential source (1.11) being in contact with the signal monitoring circuit (1.6), and
the signal monitoring circuit (1.6) being in addition in contact with the data transmission means (3).

2. Measuring system to claim 1, the measuring device being a position measuring device, in particular a rotary transducer or a linear measuring device.

3. Measuring system according to one of the preceding claims, the further device (2) being a machine control unit, in particular a machining machine.

4. Method for functional monitoring of a measuring system,
- in normal operation of the measuring system for signalling a fault-free operation of a measuring device (1), a bit with a constant level being transmitted from the measuring device (1) via a data transmission means (3) to a further device (2), and
- in a test operation of the measuring system
- a signal monitoring circuit (1.6) in the measuring device (1) being brought in electrical contact with a test potential source (1.11), and
- testing taking place in the further device (2) as to whether the test operation effects a change in level of the bit relative to the level of the normal operation.

5. Method according to claim 4, a change in level of the bit in the normal operation of the measuring system initiating a reaction of the further device (2), whilst the change in level of the bit does not initiate a reaction of the further device (2) in the test operation.

6. Method according to claim 4 or claim 5, the test potential source (1.11) being brought into electrical contact with the signal monitoring circuit (1.6) as a result of a signal of the further device (2).

7. Method according to claim 4, claim 5 or claim 6, the test operation being initiated automatically at defined temporal intervals in order to test the functional capacity of the measuring device (1).

8. Method according to one of the claims 4 to 7, the test operation being initiated manually in order to test the functional capacity of the measuring device (1).

9. Method according to one of the claims 4 to 8, upon reaching specific machine states, such as for instance tool or workpiece exchange, the test operation being initiated automatically in order to test the functional capacity of the measuring device (1).

## Revendications

1. Système de mesure, constitué
- d'un appareil de mesure (1),
- d'un appareil supplémentaire (2) et
- d'un moyen de transmission de données (3) pour transmettre des bits de données entre l'appareil de mesure (1) et l'appareil supplémentaire (2),
l'appareil de mesure (1) présentant
- un circuit de surveillance de signal (1.6)
- et un élément de commutation (1.9, 1.10), et
l'élément de commutation (1.9, 1.10) étant en contact électrique avec une source de potentiel d'essai (1.11), et
à un état de l'élément de commutation, la source de potentiel d'essai (1.11) étant en contact avec le circuit de surveillance de signal (1.6), et
le circuit de surveillance de signal (1.6) étant en outre en contact avec le moyen de transmission de données (3).

2. Système de mesure selon la revendication 1, dans lequel l'appareil de mesure est un appareil de mesure de position, en particulier un encodeur ou un appareil de mesure de longueurs.

3. Système de mesure selon une des revendications précédentes, dans lequel l'appareil supplémentaire (2) est une commande de machine, en particulier de machine d'usinage.

4. Procédé de contrôle de fonctionnement d'un système de mesure, selon lequel
- en service normal du système de mesure, pour signaler un service non perturbé d'un appareil de mesure (1), ledit appareil de mesure (1) transmet un bit de niveau constant à un appareil supplémentaire (2), par l'intermédiaire d'un moyen de transmission de données (3), et
- en service de contrôle de l'appareil de mesure,
- un circuit de surveillance de signal (1.6) dans l'appareil de mesure (1) est mis en contact électrique avec une source de potentiel d'essai (1.11), et
- l'appareil supplémentaire (2) vérifie si le service de contrôle provoque une modification du niveau du bit, par rapport au niveau du service normal.

5. Procédé selon la revendication 4, selon lequel, en service normal du système de mesure, toute variation du niveau du bit déclenche une réaction de l'appareil supplémentaire (2), tandis qu'en service de contrôle, la variation du niveau du bit ne déclenche pas de réaction de l'appareil supplémentaire (2).

6. Procédé selon la revendication 4 ou la revendication 5, selon lequel la source de potentiel d'essai (1.11) est mise en contact électrique avec le circuit de surveillance de signal (1.6), suite à un signal de l'appareil supplémentaire (2).

7. Procédé selon la revendication 4, la revendication 5 ou la revendication 6, selon lequel le service de contrôle est déclenché automatiquement à des intervalles de temps défini, aux fins de contrôler le bon fonctionnement de l'appareil de mesure (1).

8. Procédé selon une des revendications 4 à 7, selon lequel le service de contrôle est déclenché manuellement pour contrôler le bon fonctionnement de l'appareil de mesure (1).

9. Procédé selon une des revendications 4 à 8, selon lequel, lorsque des états de machine définis sont atteints, par exemple un changement d'outil ou de pièce à usiner, le service de contrôle est déclenché automatiquement pour contrôler le bon fonctionnement de l'appareil de mesure (1).
